# EUROPEAN PATENT SPECIFICATION

(11) **EP 2 671 041 B1**
(45) Date of publication and mention of the grant of the patent: **12.07.2017**
(21) Application number: 12741708.7
(22) Date of filing: 06.01.2012
(51) Int. Cl.: F41H 5/04, F41H 1/02

(54) **BALLISTIC MATERIAL SYSTEM FOR TACTICAL BODY ARMOR**
BALLISTIKMATERIALSYSTEM FÜR EINEN TAKTISCHEN KÖRPERSCHUTZPANZER
SYSTÈME DE MATÉRIAU BALISTIQUE POUR BLINDAGE CORPOREL TACTIQUE

(30) Priority: 02.02.2011 US 201113019346
(43) Date of publication of application: 11.12.2013
(73) Proprietor: Barrday Corporation, Charlotte, NC 28214 (US)
(72) Inventor: KRUMMEL, Joe, Rising Sun, MD 21911 (US)
(74) Representative: O'Connor, Michael Donal
(86) International application number: PCT/US2012/020509
(87) International publication number: WO 2012/106065

(56) References cited:
- US-A- 5 037 692
- US-A- 5 958 804
- US-A1- 2002 161 116
- US-A1- 2009 311 930
- US-B1- 6 449 769
- US-B2- 6 846 758

## Description

### Background

Typical military and police body armor uses high performance materials. Sometimes such body armor is generically referred to as "soft body-armor." Typically high performance materials include high-performance yarns, such as Kevlar®, Twaron®, Heracron®, Dyneema®, and Spectra® etc. Soft body-armor can come in the finished form of vests, blankets, appendage protection etc.

Body armor, such as soft body-armor, can be supplement with rigid plates that protect critical organs of the body from small arms fire. Traditionally, global military standards for body armor require performance against both deformable (bullets) and non-deformable (fragments) threats. Each end-customer typically creates its own performance specification. Sometimes, these incorporate well-known (public) standards with or without additional test requirements and sometimes they are proprietary.

In such testing, bullets are typically fired from a gun/weapon and typically comprise, for example, lead, metal and/or steel etc. Non-deformable projectiles (fragments) are standard test projectiles designed to simulate a grenade or IED etc. Examples of typical, military threat types include:

| | |
|---|---|
| Deformable: | 9mm FMJ 124gr lead core and other bullets |
| Non-deformable: | RCC (Right Circular Cylinders) |
| | FSP (Fragment Simulating Projectiles) |
| | Spheres/Ball bearings |

Testing of soft body-armor may include common performance tests, such as requirements typically referred to as a V50 test and a V0 test. In both of these tests, an article is repeatedly impacted by a specific threat in order to determine the velocity (V) at which either 50% (V50) or 0% (V0) of the projectiles penetrate fully.

Examples of end-users and their associated specifications include: the U.S. Army, the U.S. Marine Corp, U.S. Special Forces, the Canadian DND, the United Kingdom MOD, and other Foreign militaries. Traditionally, military standards also require the finished goods such as soft body-armor to meet Additional Performance Criteria (APC) when subjected to a host of other test parameters. Some typical examples of other test parameters include: hot/cold testing; exposure to water and/or humidity; exposure to solvents such as gasoline, kerosene, oil; product flexibility; abrasion of high performance material; and advanced ageing. To meet various of these Advanced Performance Criteria, it is widely accepted to treat materials with a water repellency, and fluoropolymer treatments and coatings are typical.

Current military standards for tactical body armor include, for example, for the U.S. Marine Corps, - Marine Tactical Vest ("MTV"), Improved Marine Tactical Vest ("iMTV"), Plate Carrier, and Side Ballistic Insert ("ESBI"); for the US Army, the Personal Armor System for Ground Troops ("PASGT"), "Interceptor Body Armor," ("IBA") "Outer Tactical Vest" ("OTV"), Improved Outer Tactical Vest ("iOTV"), Upper Arm Protection ("DAPS"), Back Neck Protection ("NAPE") Plate Carrier ("PC"), Side Ballistic Insert ("ESBI"), "Components," "Parts," FQ/PD 07-05B (or current revision) that governs the minimum V50 requirements for Lot Article Testing ("LAT"). (QA and inspection), and First Article Testing ("FAT") for iOTV and MTV/iMTV. Such standards demand performance for both non-deformable and deformable projectiles. Examples of non-deformable projectiles include Right Circular Cylinders ("RCC") and Fragment Simulating Projectiles ("FSP"). Examples of deformable projectiles include a 9mm full metal jacket round, and a 124 gr. lead core bullet.

Most current materials used as ballistic materials for tactical body armor are "scoured & water repel treated" ("sc&wrt"), which is one of three common finishes available on fabrics. The three common finishes available on fabrics are: a) loom state/greige; b) scoured only; and c) water repel treated. Using such current finishes, the non-deformable part of the above standards can be met at around 0.99 pounds per square foot (psf) in a series of tests, such as under dry conditions, wet (soaked in sea water for 24hrs), angle shots (45 and 30 degrees), and pol (soak for four hrs in gas and oil). The ballistic portion (deformable) of a standard typically includes a "V50" or "V0" requirement that has to be met for each individual test. A failure for any requirement of a test is considered a complete system failure (i.e., a failure of the armor) in either qualification or lot testing. Example tests include, as mentioned above, dry, wet, angle shot, and pol. There are two common test scenarios: First Article test and Lot Acceptance Testing. In both scenarios, if the V50 test does not meet the minimum, the tested article fails the test.

The current ballistic fabrics are not efficient in passing the desired level of protection for deformable projectiles and also meeting other parts of a standard/specification. Common testing for this part of a standard employs a 9mm FMJ 124gr bullet in a V50 test. With common fabric finishes, to pass such a test results in a ballistic filler weight as high as 1.1 psf. Thus, to pass this test, more scoured & water repel treated material is needed than is needed to meet the non-deformable test requirements. Because of the requirements of such tests, the deformable threats are the key design parameter; and more material is used that is needed to meet the non-deformable portion of typical tests.

Prior advances in soft body-armor were largely through the new, stronger fiber chemistries. For example, older vests employed mainly nylon yarns. Then, for example, the U.S. Army moved to the Personal Armor System for Ground Troops vest utilizing Kevlar® (para-aramid) fibers. This allowed for a substantial drop in total vest weight and an increase in performance.

The U.S. Army then moved to the Interceptor body armor system, which replaced the PASGT style vest system. It used a para-aramid yam as well. In recent years, the Outer Tactical Vest and later the Improved Outer Tactical Vest replaced the Interceptor vest system with no substantial weight savings. The iOTV is the current system for the U.S. Army, and uses a para-aramid yarn. A similar technology path can be traced for the U.S. Marine Corp (e.g., from MTV to IMTV) and for other foreign militaries.

There are three main factors to address when designing improved materials for soft body-armor. They are, balancing the vastly different stopping mechanisms for deformable threats vs. non-deformable threats in system design; maintaining performance characteristics against Additional Performance Criteria (APC) (e.g., hot/cold, water, solvents, flexibility, abrasion, ageing etc.); and meeting ongoing quality requirements during commercial deliveries (e.g., lot acceptance testing). US2009/0311930 in the name of Wang et al. discloses a flexible knife resistant composite incorporating a stack of at least five knife resistant textile layers.

### Summary of the Invention

It is a general object of an embodiment of the present invention to provide a ballistic material system that meets desired performance criteria.

It is a further object of an embodiment of the present invention to provide a light weight ballistic material system that meets desired performance criteria.

It is another object of an embodiment of the present invention to provide a ballistic material system for soft body-armor.

It is another object of an embodiment of the invention to provide a ballistic material system which provides increased deformable and non-deformable resistance performance and/or reduced overall weight while meeting or exceeding specifications.

It is another object of an embodiment of the invention to provide a ballistic material system which to reduce casualties caused by fragments, bullet and artillery fire.

It is still another object of an embodiment of the invention to provide a ballistic material system which weighs less than current military vests technology.

It is another object of an embodiment of the invention to provide a ballistic material system which has increased flexibility.

It is a further object of an embodiment of the invention to provide a ballistic material system that provides increased comfort, mobility and versatility.

It is still a further object of an embodiment of the invention to provide a ballistic material system which incorporates fibers having high flame resistance and thermal stability.

The above and other objects of the invention are met through a ballistic material system as claimed in claim 1.

### Brief Description of the Drawings

Figure 1 schematically illustrates layers of a monolithic material structure.
Figure 2 schematically illustrates layers of a symmetrical hybrid structure.
Figure 3 schematically illustrates layers of a symmetrical hybrid structure usable in accordance with embodiments of the present invention.
Figure 4 is an example weave pattern usable in embodiments of the present invention.

### Description of the Preferred Embodiments

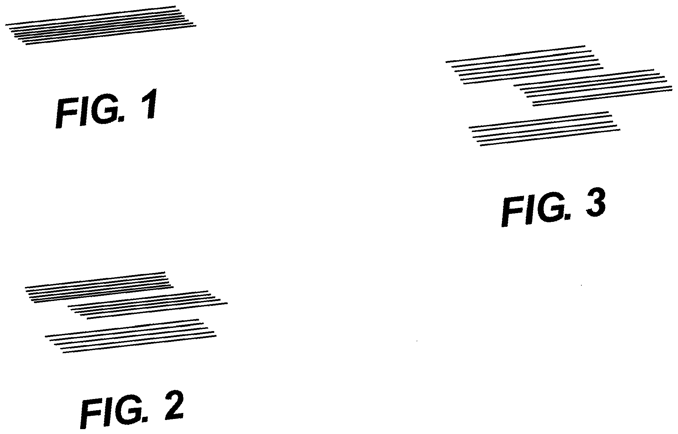

Figure 1 schematically illustrates layers of a monolithic material structure. In such typical monolithic structures, the fabric of the layers is scoured and water repellant treated fabric. The fabric of the layers all have the same weave and denier. This configuration may pass the current standards at 1.1 pfs, not at .99 pfs with the savings of embodiments of the present invention. Figure 2 schematically illustrates layers of a symmetrical hybrid structure. The Figure 2 structure includes two monolithic structures that sandwich an internal layer structure. The fabric of the layers of the internal layer structure is scoured and water repellant treated fabric. That fabric has a different weave and/or denier than the monolithic structures. This configuration will meet the current requirements at the 1.1 psf weight but has not been able to safely lower the weight to .99 psf.

Figure 3 schematically illustrates layers of a symmetrical hybrid structure usable in accordance with embodiments of the present invention. In one embodiment of the present invention, a soft body-armor, such as a vest, includes various layers of fabric. If the soft body-armor, such as a vest, can be reversed (e.g., front side/strike face flipped to back/body side) and the layer counts and material order does not change, the vest is called symmetrical. The present invention can be used in many applications. Examples of such applications include, but are not limited to, appendage armor (arm, leg, neck, groin etc.), flexible blanket systems, plate carriers, bomb suits, and demining suits.

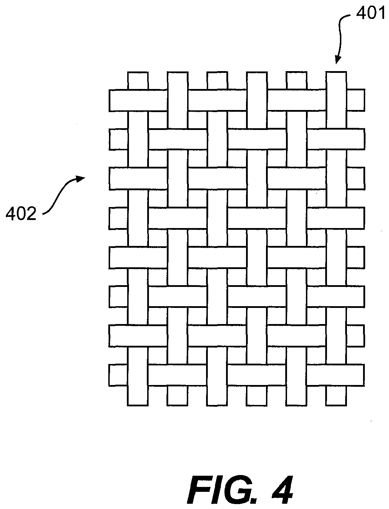

Typically, fabric is woven from individual high-strength fibers. Multiple fibers are put in the roll direction (warp) and then fibers in the perpendicular direction (weft) are inserted. Figure 4 is an example weave pattern usable in embodiments of the present invention. Figure 4 illustrates example warp fibers 401 and weft fibers 402.

Embodiments of the present invention can employ either a symmetrical hybrid design or a non-symmetric hybrid design. In either approach, layers of one or more types of materials such as woven fabrics, non-woven fabrics, unidirectional materials and/or mixed fibers can be used. In accordance with embodiments of the present invention, the fabric lay-up mixes different finishes that allow the ballistic material system to provide improved performance. While the example of Figure 3 shows two outer components and an inner component, the present invention is not limited to this arrangement. In the Figure 3 example, the outer components provide protection for the inner component. The number of outer and inner components can be varied in accordance with the requirements of a particular application.

Some known sources of fibers/threads that can be used in embodiments of the present invention include, but are not limited to E. I. du Pont de Nemours and Company's Kevlar® (See, e,g., DuPont Advanced Fibers Systems, Customer Inquiry Center, 5401 Jefferson Davis Highway, Richmond, VA 23234); Teijin Aramid BV's Twaron® (See, e.g., Teijin Aramid BV, P.O. Box 5153, 6802 ED, Arnhem, The Netherlands); DSM Dyneema LLC's Dyneema® (See, e.g., DSM Dyneema LLC, 1101 Highway 27 South, Stanley, NC 28164); Honeywell's Spectra® (See, e.g., Spectra, 15801 Woods Edge Road, Colonial Heights, VA 23834); Kolon Industries Inc.'s Heracron® (See, e.g., Kolon Tower 1-23, Kwacheon P.O.BOX2, Byul Yang-Dong, Kwacheon-city, Kyunggi-do, Korea); and Kuraray Co., Ltd.'s Vectran® (See, e.g., Kuraray America, Inc., 2625 Bay Area Blvd, Houston, TX 77058).

The following example illustrates the performance improvement provided by one embodiment of the present invention. In accordance with the present invention, embodiments can use levels of water repellency as defined by, e.g., solvent extractable testing and NMR testing. Water repellency levels can be defined by, for example, levels of finish applied to individual layers of material in the range of 0-99%. This approach has demonstrated an ability to reduce weight of a ballistic material system, and to improve the overall performance. This improvement results, in part from better performance against deformable projectiles.

One exemplary embodiment is a First Article Test (FAT) for a simulated U.S. Army iOTV. In the following example data for one embodiment of the present invention, the water repellency level is zero. In this example, fabric style #1028 uses Twaron® T2000 500 denier 28 x 28 ends/inch, plain weave, and fabric style #1129 uses Twaron® T2000 840d denier 19.5 x 19.5 ends/inch, plain weave. Also, as noted above, "sc&wrt" refers to a typical scoured and water repel treated finish on fabrics (e.g., fluoropolymer treatment). This sc&wrt finish is sometimes referred to as 100% finish.

In the following table, the "B" finish for the fabric style #1129 had a 0% water repel treatment (no water repel treatment), which is also known as greige or loom state. Finish levels up to 99% have shown an increase in deformable performance. This allows better designs for deformable and non-deformable projectile threats. The current approach employs a fabric structure with 12 plies of fabric style #1028 sc&wrt on one side of 16 plies of fabric style #1129 sc&wrt, and 12 plies of fabric style #1028 sc&wrt on the other side of the 16 piles of fabric stlye #1129. This structure has a total weight of 1.09 lbs/ft².

In contrast, the exemplary embodiment employs a ballistic material fabric system with 13plies fabric style #1028 sc&wrt on one side of 11 plies fabric style #1129 B finish, and 13plies fabric style #1028 sc&wrt on the other side of the 11 piles of fabric style # 1129 B. The exemplary embodiment total weight was 0.98 lbs/ft².

| **Projectile Threat** | **Test** | **V50 Requirement** | **Current Approach** | **Exemplary Embodiment** |
|---|---|---|---|---|
| | | **(ft/sec)** | **(ft/sec)** | **(ft/sec)** |
| 2gr RCC | Dry/0 deg V50 | 2710 | 2863 | 2961 |
| | Wet/0 deg V50 | 2575 | | |
| | Dry/45 deg V50 | 2800 | 2920 | 2949 |
| | | | | |
| 4gr RCC | Dry/0 deg V50 | 2400 | 2628 | 2612 |
| | Wet/0 deg V50 | 2300 | | |
| | Dry/45 deg V50 | 2460 | 2545 | 2585 |
| | | | | |
| 16gr RCC | Dry/0 deg V50 | 2050 | 2183 | 2105 |
| | Wet/0 deg V50 | 1920 | | |
| | Dry/45 deg V50 | 2080 | 2187 | 2224 |
| | Gas/0 deg V50 | 1900 | | |
| | | | | |
| 64gr RCC | Dry/0 deg V50 | 1660 | 1761 | 1695 |
| | Wet/0 deg V50 | 1610 | | |
| | Dry/45 deg V50 | 1660 | 1724 | 1724 |
| | | | | |
| 9mm FMJ | Dry/0 deg V50 | 1525 min (1625 pref) | 1699 | 1727 |
| | Wet/0 deg V50 | | | |
| | Dry/45 deg V50 | | | |

The above data shows that the exemplary embodiment provided an overall improvement in performance with about 11% less weight. This results in, for example, military and law enforcement personnel being more mobile and less subject to fatigue.

Another exemplary embodiment is a First Article Test (FAT) for a simulated U.S. Army iOTV. In this embodiment, fabric style #1028 uses Twaron® T2000 500 denier 28 x 28 ends/inch, plain weave, and fabric style #1129 uses Twaron® T2000 840d denier 19.5 x 19.5 ends/inch, plain weave. In this example, both the current approach and the exemplary embodiment had the same ballistic fabric layer count. The exemplary embodiment, however, used fabric style #1129 B finish as in the above example. Since both structures had the same ballistic fabric layer count, they both had a total weight of 0.98 lbs/ft².

| **Projectile Threat** | **Test** | **V50 Requirement** | **Current Approach** | **Exemplary Embodiment** |
|---|---|---|---|---|
| | | **(ft/sec)** | **(ft/sec)** | **(ft/sec)** |
| 9mm FMJ | Dry/0 deg V50 | 1525 min (1625 pref) | 1593 | 1727 |

The above data shows that the exemplary embodiment provided significant improvement in performance compared to the current approach.

The above embodiments illustrate possible uses of the present invention, and are not intended to be limited to the examples. Those skilled in the art will readily recognize that other ballistic fabric structures can employ the present invention, which scope is defined by the following claims.

## Claims

1. A ballistic material system comprising:
a first set of ballistic fabric layers having a first finish;
a second set of fabric layers positioned having a first side positioned facing the first set of ballistic fabric layers and having a second finish different to the first finish;
a third set of fabric layers having the first finish and positioned facing a second side of the second set of fabric layers; and
wherein the first finish is a scoured and water repel treated finish.

2. A ballistic material system according to claim 1, wherein the second finish has water repel treatment in the range of 0% to 99%.

## Patentansprüche

1. Ballistisches Materialsystem, das Folgendes umfasst:
einen ersten Satz ballistischer Gewebeschichten mit einem ersten Finish;
einen zweiten Satz von Gewebeschichten, der so angeordnet ist, dass eine erste Seite dem ersten Satz ballistischer Gewebeschichten gegenüberliegt, und der ein zweites Finish hat, das sich von dem ersten Finish unterscheidet;
einen dritten Satz von Gewebeschichten, der das erste Finish aufweist und einer zweiten Seite des zweiten Satzes von Gewebeschichten gegenüberliegt; und
wobei das erste Finish ein gereinigtes und wasserabweisend behandeltes Finish ist.

2. Ballistisches Materialsystem nach Anspruch 1, wobei das zweite Finish eine wasserabweisende Behandlung im Bereich von 0 % bis 99 % aufweist.

## Revendications

1. Système de matériau balistique comprenant :
un premier ensemble de couches de tissu balistique ayant un premier apprêt ;
un deuxième ensemble de couches de tissu positionné avec un premier côté positionné face au premier ensemble de couches de tissu balistique et ayant un second apprêt différent du premier apprêt ;
un troisième ensemble de couches de tissu ayant le premier apprêt et positionné face à un second côté du deuxième ensemble de couches de tissu ; et
dans lequel le premier apprêt est un apprêt lavé et déperlant.

2. Système de matériau balistique selon la revendication 1, dans lequel le second apprêt présente un traitement déperlant dans la plage de 0 % à 99 %.
